Europäisches Patentamt

European Patent Office

Office européen des brevets

(19)

(11) Veröffentlichungsnummer: **0 431 394 A2**

## (12) EUROPÄISCHE PATENTANMELDUNG

(21) Anmeldenummer: 90122196.0

(22) Anmeldetag: **20.11.90**

(51) Int. Cl.⁵: **G01N 7/00**, G01N 25/18

(30) Priorität: **07.12.89 DE 8914433 U**

(43) Veröffentlichungstag der Anmeldung:
**12.06.91 Patentblatt 91/24**

(84) Benannte Vertragsstaaten:
**DE DK FR GB NL**

(71) Anmelder: **Siemens Aktiengesellschaft**
**Wittelsbacherplatz 2**
**W-8000 München 2(DE)**

(72) Erfinder: **Aidam, Eckhard**
**Ulmenstrasse 7**
**W-6729 Jockgrim(DE)**
Erfinder: **Marcaux, Günter, Dipl.-Ing.**
**Bleichstrasse 3068**
**W-6707 Schifferstadt(DE)**

(54) Verfahren und Messeinrichtung zur Analyse von Gasen.

(57) Bei dem Meßverfahren wird das zu bestimmende Gas in einer Meßkammer periodisch erwärmt.
Der dabei entstehende periodische Druckanstieg in
der Meßkammer wird in ein elektrisches Wechselsignal umgewandelt, dessen Amplitude von der spezifischen Temperaturleitzahl des Gases abhängig ist.

Verfahren und entsprechend aufgebaute Meßeinrichtung werden insbesondere zur Bestimmung von
Anteilen von Wasserstoff oder Edelgasen in Stickstoff eingesetzt.

FIG 1

EP 0 431 394 A2

## VERFAHREN UND MESSEINRICHTUNG ZUR ANALYSE VON GASEN

Die Erfindung bezieht sich auf ein Verfahren und eine Meßeinrichtung zur Analyse von Gasen.

Bekannte Meßeinrichtungen, deren Meßeffekt auf der unterschiedlichen Wärmeleitfähigkeit von Gasen beruht, weisen eine Reihe von Nachteilen auf, nämlich hohe Zeitkonstanten, Strömungsabhängigkeit, geringe Korrosionsbeständigkeit der Meßelemente, insbesondere der Heizdrähte gegenüber aggressiven Gasen sowie schwierige Herstellung der Meßzelle mit den zu einer Widerstandsmeßbrücke geschalteten Heizdrähten.

Es besteht demgemäß die Aufgabe, eine Meßeinrichtung für die Gasanalyse zu schaffen, mit hoher Langzeitstabilität, niedriger Zeitkonstante, hoher Korrosionsbeständigkeit und einfachem Aufbau.

Eine Lösung dieser Aufgabe läßt sich mit einem Verfahren mit den Merkmalen des Anspruchs 1 und mit einer Meßeinrichtung mit den Merkmalen des Anspruchs 2 erreichen.

Das hierbei verwendete neuartige Meßprinzip beruht auf der dynamischen Messung der gasspezifischen Temperaturleitzahl, welche eine Funktion des Wärmeleitvermögens, der spezifischen Wärme und der Dichte des Gases und nahezu unabhängig von der jeweiligen Umgebungstemperatur ist. Der Druckimpulsfühler und die nachfolgende elektrische Auswertung arbeiten aufgrund der Wechselmeßgröße driftfrei. Der Heizdraht bzw. die Heizdrähte, die mit den Meßgasen in Berührung kommen, sind nicht Bestandteil einer Widerstandsmeßbrücke; sie lassen sich ohne weiteres, z. B. durch Verglasung, korrosionsbeständig ausführen.

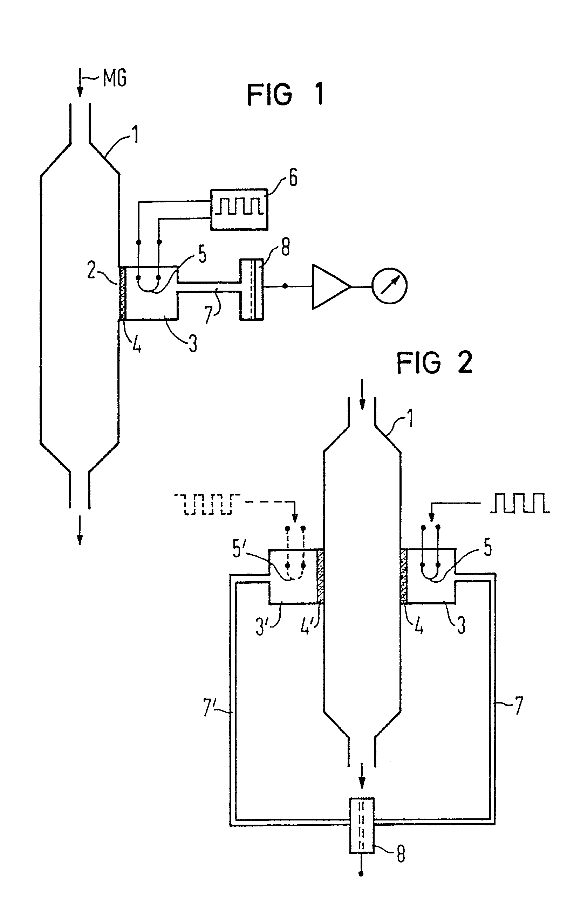

Zur Erläuterung der Erfindung ist in der Figur 1 das Meßprinzip anhand eines Ausführungsbeispiels dargestellt. Figur 2 zeigt ein weiteres Ausführungsbeispiel.

Eine Meßstrecke 1 wird von dem Meßgas MG mit geringer Strömungsgeschwindigkeit durchströmt. In der Wand der als Leitung großen Querschnitts ausgebildeten Meßstrecke 1 ist eine Öffnung 2 angebracht, die in eine Meßkammer 3 führt. In der Öffnung 2 befindet sich ein gasdurchlässiges Element 4 mit hohem Strömungswiderstand, beispielsweise eine Fritte. In der Meßkammer 3 ist ein Heizelement 5 angebracht, welches aus einer gepulsten Energiequelle 6 gespeist wird. Die Pulsfrequenz liegt im Bereich zwischen 5 und 30 Hz. Durch das relativ großflächige Filterelement 4 tritt das durch die Meßstrecke 1 strömende Meßgas MG in die Meßkammer 3 ein. Den durch die impulsweisen Temperaturerhöhungen bewirkten Druckerhöhungen setzt das Element 4 einen hohen Strömungswiderstand entgegen, so daß die Druckimpulse praktisch ohne Verlust über eine Leitung 7 einem Druckimpulsfühler 8 zugeleitet werden können. Der Druckimpulsfühler 8, beispielsweise ein Membrankondensator, wandelt die Druckimpulse in elektrische Impulse um, die verstärkt und angezeigt werden. Die Meßeinrichtung läßt sich mit den interessierenden Gasen in reiner Form kalibrieren. Die Amplitude der elektrischen Wechselgröße des Ausgangssignals ist gasspezifisch.

Bei Meßverfahren, die mit Wechseldrücken arbeiten, ist eine möglichst große Symmetrie des Meßkreisaufbaus anzustreben. In Figur 2 ist ein solcher dargestellt. Gleiche Teile tragen die gleichen Bezugszeichen wie bei der Prinzipschaltung nach Figur 1. Spiegelbildlich zur Meßkammer 3 ist hier eine gleichartige Kammer 3' als Vergleichskammer angeordnet, die ebenfalls über ein gasdurchlässiges Element 4' hohen Strömungswiderstands mit der Meßstrecke 1 und über eine Leitung 7' mit dem Druckimpulsfühler 8 in Verbindung steht. Die Vergleichskammer 3' dient in dieser Anordnung zur Gleichtaktunterdrückung bei vergleichsweise langsamen Druckänderungen in der Meßstrecke 1.

In der Vergleichskammer 3' kann jedoch auch, wie gestrichelt angedeutet, ein Heizelement 5' angeordnet werden, welches im Gegentakt zu dem Heizelement 5 in der Meßkammer 3 betrieben wird, was zu einer erheblichen Erhöhung des Meßeffekts führt.

Soll eine bestimmte Komponente aus einem mehrere Komponenten enthaltenden Gasgemisch detektiert werden, so ist dafür zu sorgen, daß das von den übrigen Gasen des Gasgemischs hervorgerufene Signalniveau kompensiert wird. Zu diesem Zwecke wird in einer Anordnung nach Figur 2 das Element 4' gasundurchlässig ausgeführt, d. h., die Vergleichskammer 3' steht nicht mehr in Verbindung mit der Meßstrecke 1, sondern wird mit Vergleichsgas VG, insbesondere einem sogenannten Restgas, d. h. einem dem Meßgas entsprechenden Gasgemisch ohne die zu messende Komponente, beschickt. Das Heizelement 5' ist dann im Gleichtakt mit dem Heizelement 5 zu betreiben, so daß das am Druckimpulsfühler 8 entstehende Druckdifferenzsignal das dem zu detektierenden Gas entsprechende Meßsignal ist.

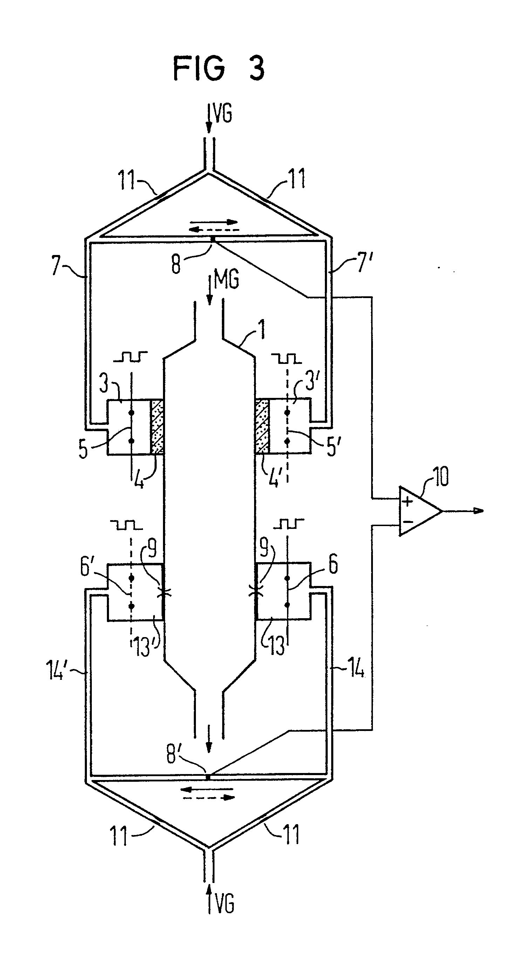

Meßgeräte, deren Meßeffekt von Druckimpulsen in gasgefüllten Leitungssystemen abgeleitet werden, sind gegen Erschütterungen oder Bewegungen mit hoher Beschleunigung besonders empfindlich, da dadurch Störimpulse entstehen können, die zu Fehlmessungen führen. Zur Unterdrückung derartiger Störimpulse kann, wie Figur 3 zeigt, ein Kompensationssystem gleichen Aufbaus wie das Meßsystem vorgesehen werden, dessen einander gegenüberliegend, an der Meßstrecke 1 angeordnete Kompensationskammern 13, 13' keine Verbindung zu dieser aufweisen oder, wie dargestellt, lediglich über Kapillaren 9 zum Druckangleich mit der Meßstrecke 1 verbunden sind. Die Kompensationskammern 13, 13' sind mit einem Vergleichsgas VG gefüllt und mit Heizelementen 6, 6' versehen, die synchron mit dem oder den Heizelement-(en) 5, 5' des Meßkreises betrieben werden. Die Kompensationskammern 13, 13' sind über Leitungen 14, 14' an einen weiteren Druckimpulsfühler 8' angeschlossen. Das Ausgangssignal des Druckimpulsfühlers 8' im Kompensationskreis wird in dem Operationsverstärker 10 in Differenz zu dem vom Druckimpulsfühler 8 herrührenden Meßsignal geschaltet.

In der in Figur 3 dargestellten Meßeinrichtung ist als Druckimpulsfühler 8 bzw. 8' anstelle des Membrankondensators ein auf dem Anemometerprinzip beruhender Mikro-Strömungsfühler angeordnet, mit welchem die Ausgleichsströmung gemessen wird, die sich bei den wechselseitigen, pulsartigen Druckerhöhungen zwischen den Kammern 3, 3' im Meßkreis und den Kammern 13, 13' im Kompensationskreis ergeben.
Das in die Kammern 3, 3' des Meßkreises einströmende Vergleichsgas VG hat eine mit Hilfe der Drosseln 11 einstellbare, sehr geringe Strömungsgeschwindigkeit, so daß die Zusammensetzung des aus der Meßstrecke 1 in die Kammern eindiffundierten Meßgases MG nur in meßtechnisch tolerierbarem Maße verändert wird.

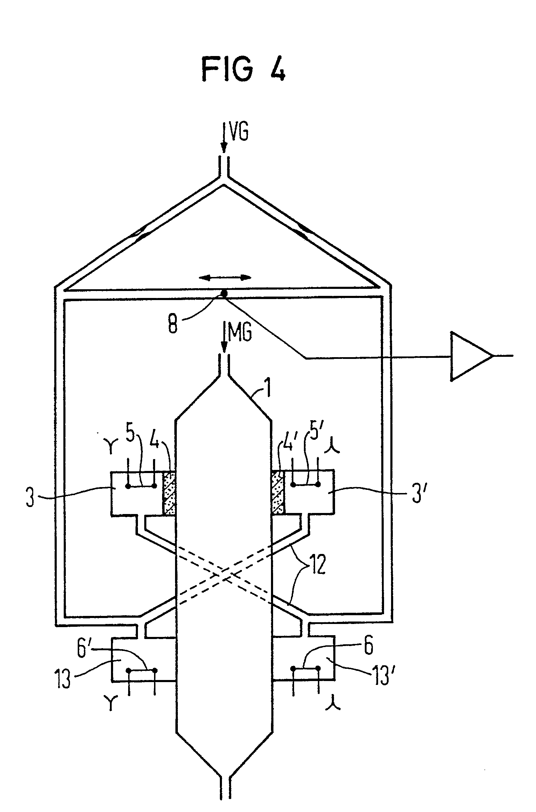

In Figur 4 ist ein weiteres Ausführungsbeispiel einer Meßeinrichtung dargestellt. Gleiche Teile tragen die gleichen Bezugszeichen wie in den vorhergehenden Ausführungsbeispielen. Die Kompensation von Störgrößen wird bei dieser Einrichtung durch pneumatische Differenzbildung erreicht, indem die Kammern 3, 3' des Meßsystems mit den Kammern 13, 13' des Kompensationssystems über sich kreuzende Leitungen 12 miteinander verbunden sind. Es wird bei dieser Schaltung nur ein Druckimpulsfühler 8 in Form eines Mikro-Strömungsfühlers benötigt. Bei der Messung von Gasgemischen, die keine korrosiven Bestandteile enthalten, kann als Vergleichsgas VG Luft verwendet werden.

## Ansprüche

1. Verfahren zur Analyse von Gasen, **dadurch gekennzeichnet,** daß das zu bestimmende Gas in einer Meßkammer periodischer Wärmezufuhr ausgesetzt wird und der dadurch verursachte periodische Druckanstieg in ein elektrisches Wechselsignal umgewandelt wird, dessen Amplitude von der spezifischen Temperaturleitzahl des Gases abhängig ist.

2. Meßeinrichtung zur Durchführung des Verfahrens nach Anspruch 1, **gekennzeichnet durch:**
   - eine Meßstrecke (1) in Form einer von Meßgas (MG) durchströmten Leitung,
   - mindestens eine über eine gasdurchlässige Öffnung hohen Strömungswiderstands mit der Meßstrecke (1) verbundene Meßkammer (3),
   - ein in der Meßkammer (3) angeordnetes Heizelement (5),
   - eine gepulste Energiequelle (6) zur Speisung des Heizelements (5),
   - einen an die Meßkammer (3) angeschlossenen Druckimpulsfühler (8) und
   - eine Schaltung zur Umwandlung der der gasspezifischen Temperaturleitzahl proportionalen Druckimpulse in ein elektrisches Meßausgangssignal.

3. Meßeinrichtung nach Anspruch 2, **gekennzeichnet durch:**
   - eine spiegelbildlich zur Meßkammer (3) angeordnete und über eine gasdurchlässige Öffnung (4') hohen Strömungswiderstands mit der Meßstrecke (1) verbundene, an den Druckimpulsfühler (8) angeschlossene Vergleichskammer (3').

4. Meßeinrichtung nach Anspruch 3, **gekennzeichnet durch:**
   - ein in der Vergleichskammer (3') angeordnetes, im Gegentakt zu dem Heizelement (5) in der Meßkammer (3) betriebenes Heizelement (5').

5. Meßeinrichtung nach Anspruch 3 zur Analyse einer Komponente eines aus mehreren Komponenten bestehenden Gasgemischs, **dadurch gekennzeichnet,**
   - daß die Vergleichskammer (3') gegen die Meßstrecke (1) gasdicht abgeschlossen und mit einem Vergleichsgas (VG) beschickt ist
   - und daß das Heizelement (5') im Gleichtakt mit dem Heizelement (5) in der Meßkammer (3) betrieben wird.

6. Meßeinrichtung nach Anspruch 4, **dadurch gekennzeichnet,**
   - daß das Vergleichsgas (VG) ein dem Meßgas entsprechendes Gasgemisch ohne die zu messende Komponente ist.

7. Meßeinrichtung nach Anspruch 3 oder 4, **gekennzeichnet durch:**

- ein weiteres, dem Meßsystem (3, 3'; 4, 4'; 5, 5'; 7, 7'; 8) gleichendes Kompensationssystem (6, 6'; 8'; 13, 13'; 14, 14'), dessen einander gegenüberliegende, an der Meßstrecke (1) angeordnete, mit einem Vergleichsgas (VG) gefüllte Kammern (13, 13') keine Verbindung zu dieser aufweisen, dessen Heizelement(e) (6 bzw. 6, 6') synchron zu dem oder denen des Meßkreises (5, 5') betrieben werden und dessen aus dem Druckimpulsfühler (8') herrührendes Ausgangssignal in Differenz zu dem Meßsignal geschaltet ist.

EP 0 431 394 A2

FIG 1

FIG 2

5

# FIG 3

# FIG 4